# EUROPEAN PATENT APPLICATION

(11) **EP 4 400 847 A1**
(43) Date of publication of application: **17.07.2024**
(21) Application number: 21960216.6
(22) Date of filing: 13.10.2021
(51) Int. Cl.: G01R 15/24, G01D 5/26

(54) **DETECTION APPARATUS, SHUNT CIRCUIT AND TERMINAL DEVICE**

(71) Applicant: Huawei Technologies Co., Ltd., Shenzhen, Guangdong 518129 (CN)
(72) Inventor: LIU, Jian, Shenzhen, Guangdong 518129 (CN); CAI, Zhonghua, Shenzhen, Guangdong 518129 (CN); HE, Shidong, Shenzhen, Guangdong 518129 (CN); GAO, Lei, Shenzhen, Guangdong 518129 (CN); ZHANG, Huahong, Shenzhen, Guangdong 518129 (CN)
(74) Representative: MERH-IP Matias Erny Reichl Hoffmann Patentanwälte PartG mbB
(86) International application number: PCT/CN2021/123528
(87) International publication number: WO 2023/060474

(57) **Abstract**

This application discloses a detection apparatus, a shunt circuit, and a terminal device. The detection apparatus may include a detection unit, an optical-to-electrical conversion unit, and a shunt circuit. The optical-to-electrical conversion unit performs optical-to-electrical conversion on an optical signal received by the detection unit, to obtain a current signal including a first current signal. The shunt circuit may shunt the first current signal to obtain N second current signals used to generate N second voltage signals. In this way, when the detection apparatus detects a reflected signal with a high luminous intensity, the detection apparatus can shunt a current signal corresponding to the reflected signal, so that voltage signals that can be output by the detection apparatus are not saturated, and the reflected signal of a target object is completely obtained, thereby effectively increasing a luminous intensity range of reflected signals that can be detected by the detection apparatus.

## Description

### TECHNICAL FIELD

This application relates to the field of lidar technologies, and in particular, to a detection apparatus, a shunt circuit, and a terminal device.

### BACKGROUND

With the development of science and technology, laser ranging, microwave radar ranging, ultrasonic ranging, and the like have emerged in the field of ranging. A laser detection apparatus mainly includes a laser transmitter, a laser receiver, and a processor. The laser transmitter may transmit a laser signal. The laser signal is reflected after encountering an object. In this case, the laser receiver can detect the reflected signal, convert the reflected signal into an electrical signal, and perform corresponding processing (for example, amplification or conversion) on the electrical signal and output the electrical signal to the processor. In this way, the processor can determine a distance between the laser detection apparatus and the object and luminous intensity information of the reflected signal.

However, if a luminous intensity of the reflected signal is high (for example, the luminous intensity exceeds 5,000 cd), the electrical signal obtained by the laser receiver through conversion of the reflected signal exceeds a range of signals that can be received by the processor, and the processor cannot accurately obtain the electrical signal corresponding to the reflected signal. Consequently, the processor cannot accurately determine the distance between the laser detection apparatus and the object and the luminous intensity information of the reflected signal. Therefore, a luminous intensity range of reflected signals that can be detected by the laser detection apparatus is limited.

Therefore, how to improve the luminous intensity range (which may also be referred to as a dynamic range) of the reflected signals that can be detected by the laser detection apparatus is a technical problem to be resolved urgently.

### SUMMARY

Embodiments of this application provide a detection apparatus, a shunt circuit, and a terminal device, to improve a luminous intensity range of reflected signals that can be detected by the detection apparatus. The method may be applied to the Internet of vehicles, for example, vehicle-to-everything (vehicle-to-everything, V2X), a long term evolution-vehicle (long term evolution-vehicle, LTE-V) technology, and vehicle to vehicle (vehicle-vehicle, V2V).

According to a first aspect, an embodiment of this application provides a detection apparatus.

For example, the detection apparatus may include a detection unit, an optical-to-electrical conversion unit, and a shunt circuit. The detection unit may be configured to receive an optical signal including a reflected signal of a laser transmit signal. The optical-to-electrical conversion unit may be configured to perform optical-to-electrical conversion on the received optical signal, to obtain a current signal including a first current signal. The shunt circuit may be configured to shunt the first current signal to obtain N second current signals used to generate N second voltage signals Vᵢ. N is an integer greater than or equal to 1, and i is an integer greater than or equal to 1 and less than or equal to N.

In this embodiment of this application, after the optical-to-electrical conversion unit in the detection apparatus performs optical-to-electrical conversion on the optical signal to obtain the current signal, the shunt circuit may shunt the first current signal in the current signal, to obtain the N second current signals. The N second current signals may be used to generate a plurality of voltage signals, so that the detection apparatus may output a plurality of voltage signals. In this way, when the detection apparatus detects a reflected signal with a high luminous intensity, voltage signals obtained after the detection apparatus processes the current signal corresponding to the reflected signal are not saturated (namely, within a value range of voltage signals that can be received by a next-stage processing circuit), thereby effectively increasing a luminous intensity range of the reflected signals that can be detected by the detection apparatus.

It should be noted that the "high luminous intensity" may be understood as that the luminous intensity of the current reflected signal exceeds the luminous intensity range of the reflected signals that can be detected by the detection apparatus. Different detection apparatuses may correspond to different luminous intensity ranges. For example, for a laser detection apparatus, a luminous intensity range is from 500 cd to 5,000 cd. For another example, for an infrared light detection apparatus, a luminous intensity range is from 100 cd to 1,000 cd.

In a possible design, a current value of the current signal obtained by performing optical-to-electrical conversion on the optical signal by the optical-to-electrical conversion unit is greater than a preset threshold. In this design, the shunt circuit shunts the first current signal in the current signal only when the current value of the current signal corresponding to the reflected signal of a target object is greater than the preset threshold, to obtain a plurality of second current signals, and the plurality of second current signals may be used to generate a plurality of second voltage signals.

In a possible design, the N second voltage signals Vᵢ may be used to determine distance information of a target object generating the reflected signal and/or intensity information of the optical signal. In this design, because the N second voltage signals are not saturated, the distance information of the target object and/or the intensity information of the optical signal that are/is determined based on the N second voltage signals are/is more accurate.

In a possible design, the shunt circuit may shunt the first current signal based on N preset first control signals, to obtain the N second current signals. One preset first control signal may correspond to one bias voltage, and the N preset first control signals correspond to N bias voltages VBᵢ. Values of the N bias voltages may be the same or different. This is not specifically limited in this embodiment of this application.

It should be noted that the N preset first control signals are in a one-to-one correspondence with the N second current signals. In other words, one second current signal may be obtained by shunting the first current signal based on one preset first control signal.

In this design, the shunt circuit may shunt the first current signal based on the N preset first control signals, so that the shunt circuit can quickly shunt the first current signal, and a next-stage processing circuit can receive a voltage signal corresponding to the reflected signal more quickly, thereby effectively improving efficiency of determining information about a distance between the target object and the detection apparatus and/or the intensity information of the optical signal.

In a possible design, the shunt circuit may include N second shunt circuits, and the N second shunt circuits may shunt the first current signal based on the N preset first control signals, to obtain the N second current signals.

It should be noted that each of the N second shunt circuits is in a one-to-one correspondence with each of the N preset first control signals, and each first control signal is in a one-to-one correspondence with each of the N second current signals. In other words, each second shunt circuit may shunt the first current signal based on a first control signal corresponding to the second shunt circuit, to obtain one second current signal. For example, a second shunt circuit 1 shunts the first current signal based on a first control signal 1, to obtain a second current signal 1. For example, a second shunt circuit 2 shunts the first current signal based on a first control signal 2, to obtain a second current signal 2.

In this design, the N second shunt circuits that are in a one-to-one correspondence with the N preset first control signals are disposed in the shunt circuit, so that each second shunt circuit may shunt the first current signal based on the first control signal corresponding to the second shunt circuit, and each second shunt circuit may obtain a second current signal that meets a preset dynamic range (namely, a value range of the current signal) of the second shunt circuit.

In a possible design, the shunt circuit may further shunt the first current signal based on received N second control signals, to obtain N fourth current signals used to generate N third voltage signals V_{i'}. One second control signal may correspond to one bias voltage, and the N second control signals correspond to N bias voltages VB_{i'}. Values of the N bias voltages may be the same or different. This is not specifically limited in this embodiment of this application.

It should be noted that the "received N second control signals" may be received by the shunt circuit from a next-stage processing circuit. The next-stage processing circuit may be an external processing circuit of the detection apparatus or an internal processing circuit of the detection apparatus. Optionally, the N second control signals may be dynamically determined based on the N second voltage signals output by the shunt circuit. For example, a second control signal 1 is determined based on a second voltage signal V₁, and a second control signal 2 is determined based on a second voltage signal 2.

In a possible design, the N third voltage signals V_{i'} may be used to determine the distance information of the target object generating the reflected signal and/or the intensity information of the optical signal. In this design, because the N third voltage signals are not saturated, the information about the distance between the target object and the detection apparatus and/or the intensity information of the optical signal that are/is determined based on the N third voltage signals V_{i'} are more accurate.

In a possible design, the shunt circuit further includes a first shunt circuit, and the current signal further includes a third current signal. The first shunt circuit may be configured to shunt the third current signal used to generate a first voltage signal V₀. In this design, the first shunt circuit shunts some current signals that are less than the preset threshold and that are in the current signal corresponding to the reflected signal, to obtain the third current signal, so that the some current signals can be quickly output.

It should be noted that a current value corresponding to the third current signal is less than the preset threshold.

In a possible design, the first voltage signal V₀ may be used to determine the distance information of the target object generating the reflected signal and/or the intensity information of the optical signal. In this design, the first voltage signal generated based on the third current signal may be used to determine the distance information of the target object generating the reflected signal and/or the intensity information of the optical signal, so that the distance information of the target object and/or the intensity information of the optical signal that are/is determined by the detection apparatus are/is more accurate.

According to a second aspect, an embodiment of this application further provides a shunt circuit. The shunt circuit may be a shunt circuit in the foregoing detection apparatus.

For example, the shunt circuit may include a first node N₁, N second shunt circuits, and N processing circuits. The first node N₁ is coupled to input ends of the N second shunt circuits, and output ends of the N second shunt circuits are respectively coupled to input ends of the N processing circuits. N is an integer greater than or equal to 1. The first node N₁ may be configured to input a first current signal to the N second shunt circuits. The N second shunt circuits may be configured to shunt the first current signal to obtain N second current signals. The N processing circuits may be configured to process the N second current signals to generate N second voltage signals Vᵢ.

In this embodiment of this application, the N second shunt circuits and the N processing circuits are disposed in the shunt circuit, so that each second shunt circuit may shunt the first current signal to obtain corresponding second current signals, and the processing circuits corresponding to the second shunt circuits may further process the second current signals to generate the second voltage signals. In this way, the shunt circuit may output a plurality of voltage signals, so that the voltage signals output by the shunt circuit are not saturated.

In a possible design, the N second voltage signals may be used to determine distance information of a target object generating a reflected signal and/or intensity information of an optical signal. For a specific description and beneficial effects of the design, refer to the foregoing related descriptions in the second aspect.

In a possible design, the shunt circuit may further include a first component and a first shunt circuit. An output end of the first component is coupled to an input end of the first shunt circuit, and the output end of the first component is coupled to input ends of the N second shunt circuits through the first node N₁. The first component may be configured to obtain a current signal including the first current signal and a third current signal. The first shunt circuit may be configured to shunt the current signal to obtain the third current signal used to generate a first voltage signal V₀.

In this design, the first component configured to obtain the current signal is disposed, and the output end of the first component is coupled to both the input end of the first shunt circuit and the input ends of the N second shunt circuits, so that the current signal is shunted. In addition, the N second current signals and the third current signal that are obtained after shunting may generate a plurality of voltage signals, so that the voltage signals output by the shunt circuit are not saturated.

In a possible design, the first voltage signal V₀ may be used to determine the distance information of the target object generating the reflected signal and/or the intensity information of the optical signal. For a specific description and beneficial effects of the design, refer to the foregoing related descriptions in the second aspect.

In a possible design, a current value of the current signal is greater than a preset threshold, and a current value of the third current signal is less than the preset threshold. For a specific description and beneficial effects of the design, refer to the foregoing related descriptions in the second aspect.

In a possible design, the N second shunt circuits may shunt the first current signal based on the N preset first control signals, to obtain the N second current signals. For a specific description and beneficial effects of the design, refer to the foregoing related descriptions in the second aspect.

In a possible design, the N processing circuits may be further configured to receive the N second control signals. The N second shunt circuits may be further configured to shunt the first current signal based on the N second control signals, to obtain N fourth current signals. The N processing circuits may be further configured to process the N fourth current signals, to obtain N third voltage signals V_{i'}. For a specific description and beneficial effects of the design, refer to the foregoing related descriptions in the second aspect.

In a possible design, an i^{th} second shunt circuit in the N second shunt circuits may include a discharge circuit Dᵢ. Each of the N processing circuits includes a first resistor Rₛₑₙₛₒᵣ, a second node N₂, a first capacitor C₁, and an amplification circuit. An input end of the discharge circuit Dᵢ is coupled to the first node N₁. The first resistor Rₛₑₙₛₒᵣ is coupled to both an output end of the discharge circuit Dᵢ and an input end of the amplification circuit. One end of the first capacitor C₁ is coupled to both the first resistor Rₛₑₙₛₒᵣ and the input end of the amplification circuit through the second node N₂, and the other end is grounded. The discharge circuit Dᵢ may be configured to shunt the first current signal, to obtain the second current signals. The first resistor Rₛₑₙₛₒᵣ may be configured to convert the second current signals into fourth voltage signals, and input the fourth voltage signals to the amplification circuit. The amplification circuit may be configured to amplify the fourth voltage signals to obtain the second voltage signals Vᵢ.

In this design, specific implementations of the second shunt circuits and the processing circuits are provided. In addition, the processing circuits may convert the second current signals obtained by the discharge circuit through shunting into voltage signals, and further amplify and output the voltage signals. In this way, a next-stage processing circuit can capture an accurate voltage signal, so that the distance information of the target object and/or the intensity information of the optical signal that are/is determined are/is more accurate.

In a possible design, the discharge circuit Dᵢ may be one of the following components: a diode, a metal-oxide-semiconductor (metal oxide semiconductor field effect transistor, MOS) field-effect transistor, or a transistor. In this design, the discharge circuit has many implementations, so that implementation of the discharge circuit is simplified and complexity of the circuit is reduced.

It should be understood that the amplification circuit in the processing circuits has a plurality of implementations, including but not limited to the following:

Implementation 1: The amplification circuit includes a first amplification circuit, and the first amplification circuit may be configured to amplify the fourth voltage signals, to obtain the second voltage signals Vᵢ. The first amplification circuit may include a second amplifier T₂, and the second amplifier T₂ may include one or more amplifiers. This is not specifically limited in this embodiment of this application.

In Implementation 1, a structure of the amplification circuit is simple, and implementation complexity of the processing circuits is effectively reduced.

Implementation 2: The amplification circuit may include a logarithmic amplification circuit and a second amplification circuit. An input end of the logarithmic amplification circuit is coupled to the first resistor Rₛₑₙₛₒᵣ, and an output end of the logarithmic amplification circuit may be coupled to an input end of the second amplification circuit. The logarithmic amplification circuit may be configured to amplify the fourth voltage signals to obtain fifth voltage signals. The second amplification circuit may be configured to amplify the fifth voltage signals to obtain the second voltage signals Vᵢ.

In Implementation 2, the logarithmic amplification circuit and the second amplification circuit are designed in the amplification circuit, so that a dynamic range (namely, a range of an output voltage) of the amplification circuit is effectively increased, and the second voltage signals output by the processing circuits can be more easily captured by a next-stage processing circuit.

In a possible design, the logarithmic amplification circuit may include a second amplifier T₂, a second resistor R₁, an equivalent diode D₃, a third node N₃, and a second capacitor C₂. The second amplification circuit includes a third amplifier T₃. One end of the second resistor R₁ is coupled to an output end of the second amplifier T₂, and the other end is coupled to both an input end of the equivalent diode D₃ and an input end of the third amplifier T₃. One end of the second capacitor C₂ is coupled to an output end of the equivalent diode D₃ through the third node N₃, and the other end is grounded.

In this design, after performing logarithmic amplification on the voltage signals obtained by converting the second current signals, the second amplifier T₂ outputs the voltage signals to the third amplifier T₃, so that the third amplifier T₃ may further amplify the voltage signals obtained after the logarithmic amplification, to obtain the second voltage signals corresponding to the second current signals.

In a possible design, the equivalent diode D₃ may be any one of the diode, the MOS transistor, or the transistor. In this design, the equivalent diode D₃ has a plurality of implementations, and complexity of the logarithmic amplification circuit is effectively reduced.

In a possible design, the first component is an optical-to-electrical converter, and the first component may be further configured to receive an optical signal and convert the optical signal into a current signal. In this design, the first component has a function of optical-to-electrical signal conversion, so that the shunt circuit can shunt the current signal corresponding to the optical signal reflected by the target object.

In a possible design, the first shunt circuit may include a first amplifier T₁. The first amplifier T₁ may be configured to: convert the third current signal obtained by the first shunt circuit through shunting to obtain a corresponding voltage signal, and amplify the voltage signal to obtain the first voltage signal. In this design, the first amplifier T₁ is disposed in the first shunt circuit, so that implementation of the first shunt circuit is simple.

It should be noted that the first amplifier T₁ may be one or more amplifiers. This is not specifically limited in this embodiment of this application.

According to a third aspect, an embodiment of this application provides a terminal device, including the detection apparatus according to any one of the first aspect and the possible designs of the first aspect. For example, examples of some terminal devices include but are not limited to: a smart home device (such as a television, a robotic vacuum cleaner, a smart desk lamp, a speaker system, a smart lighting system, an electrical control system, home background music, a home theater system, an intercom system, or video surveillance), an intelligent transportation device (such as a vehicle, a ship, an uncrewed aerial vehicle, a train, a wagon, or a truck), an intelligent manufacturing device (such as a robot, an industrial device, intelligent logistics, or a smart factory), and an intelligent terminal (such as a mobile phone, a computer, a tablet computer, a palmtop computer, a desktop computer, a headset, a speaker, a wearable device, a vehicle-mounted device, a virtual reality device, or an augmented reality device).

For beneficial effects of the third aspect, refer to technical effects that can be achieved by corresponding designs in the first aspect. Details are not described herein again.

### BRIEF DESCRIPTION OF DRAWINGS

FIG. 1 is a schematic diagram of a structure of a laser detection apparatus to which an embodiment of this application is applicable;
FIG. 2 is a schematic diagram of a structure of a laser receiver to which an embodiment of this application is applicable;
FIG. 3 is a schematic diagram of a structure of a detection apparatus according to an embodiment of this application;
FIG. 4A is a schematic diagram of a possible structure of a shunt circuit according to an embodiment of this application;
FIG. 4B is a schematic diagram of another possible structure of a shunt circuit according to an embodiment of this application;
FIG. 4C is a schematic diagram of another possible structure of a shunt circuit according to an embodiment of this application;
FIG. 5A is a possible schematic diagram 1 of a shunt circuit according to an embodiment of this application;
FIG. 5B is a possible schematic diagram 2 of a shunt circuit according to an embodiment of this application;
FIG. 6 is a possible schematic diagram 3 of a shunt circuit according to an embodiment of this application;
FIG. 7 is a possible schematic diagram 4 of a shunt circuit according to an embodiment of this application;
FIG. 8 is a schematic diagram of a structure of another detection apparatus according to an embodiment of this application;
FIG. 9 is a schematic diagram of a structure of still another detection apparatus according to an embodiment of this application; and
FIG. 10 is a schematic diagram of a structure of yet another detection apparatus according to an embodiment of this application.

### DESCRIPTION OF EMBODIMENTS

The following clearly and completely describes the technical solutions in embodiments of this application with reference to the accompanying drawings in embodiments of this application.

It should be understood that in the following descriptions of embodiments of this application, "a plurality of" may be understood as "at least two". "And/or" describes an association relationship between associated objects, and represents that three relationships may exist. For example, A and/or B may represent the following cases: Only A exists, both A and B exist, and only B exists, where A and B may be singular or plural. Terms such as "first", "second" and "third" are merely used for distinction and description, and shall not be understood as an indication or implication of relative importance or an indication or implication of an order. For example, a "first control signal" and a "second control signal" mentioned below are merely used to indicate different control signals, and do not have different sequences, priorities, or importance degrees.

Before the technical solutions provided in embodiments of this application are described in detail, an application scenario in embodiments of this application is first described.

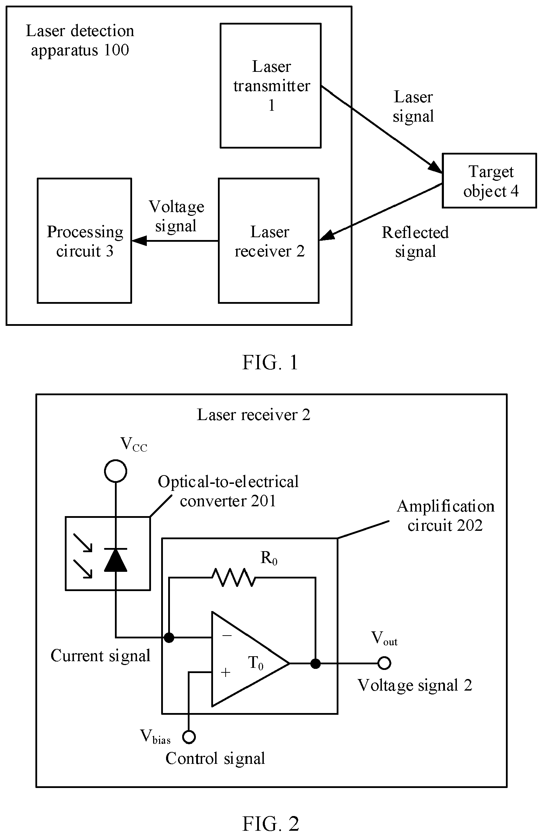

Currently, in many scenarios, a detection apparatus may be used to detect a distance of a target object. For example, with reference to FIG. 1, a laser detection apparatus 100 is used as an example of the detection apparatus. The laser detection apparatus 100 may include a laser transmitter 1, a laser receiver 2, and a processing circuit 3.

The laser transmitter 1 may transmit a laser signal. After receiving the laser signal, a target object 4 reflects a corresponding optical signal (namely, a reflected signal). The laser receiver 2 may detect the reflected signal reflected by the target object 4, convert the reflected signal to obtain a corresponding voltage signal, and input the voltage signal to the processing circuit 3. The processing circuit 3 may determine a distance between the target object 4 and the laser detection apparatus 100 and intensity information of the reflected signal based on the voltage signal.

FIG. 2 is a possible schematic diagram of a structure of the laser receiver 2. In FIG. 2, Vcc is an optical signal input end of the laser receiver 2, V_{bias} is a control signal input end of the laser receiver 2, and Vₒᵤₜ is an output end of the laser receiver 2. The laser receiver 2 includes an optical-to-electrical converter 201 and an amplification circuit 202.

The optical-to-electrical converter 201 may convert an optical signal received from the input end Vcc of the laser receiver 2, to obtain a current signal, and input the current signal to the amplification circuit 202.

The amplification circuit 202 includes an amplifier T₀ and a resistor R₀. The amplifier T₀ may convert, based on a control signal input by the control signal input end V_{bias}, the current signal to obtain a voltage signal 1, amplify the voltage signal 1 to obtain a voltage signal 2, and output the voltage signal 2 through the output end Vₒᵤₜ.

In a possible implementation, the amplification circuit 202 may output the voltage signal 2 to the processing circuit 3. After receiving the voltage signal 2, the processing circuit 3 may perform analog-to-digital conversion on the voltage signal 2, to obtain a time at which the reflected signal is returned from the target object 4 to the laser receiver 2, and then calculate a distance between the target object 4 and the laser detection apparatus 100 and intensity information of the reflected signal of the target object 4 based on the time.

However, when the distance between the target object 4 and the laser detection apparatus 100 is too short or a reflected power of the target object 4 is too large, a luminous intensity of the reflected signal of the target object is high. Consequently, a voltage value of the voltage signal 2 obtained by converting the reflected signal by the laser receiver 2 exceeds a value range of voltage signals that can be received by the processing circuit 3 (namely, voltages output by the laser receiver 2 are saturated), and the processing circuit 3 cannot accurately calculate the distance between the target object 4 and the laser detection apparatus 100, and the intensity information corresponding to the reflected signal.

Therefore, there is a technical problem to be resolved urgently: The voltages output by the laser receiver 2 avoid being saturated, so that the laser detection apparatus 100 can accurately detect the distance of the target object and/or the intensity information of the reflected signal of the target object, to increase a detection range of the laser detection apparatus.

In view of this, an embodiment of this application provides a detection apparatus. The detection apparatus includes a detection unit, an optical-to-electrical conversion unit, and a shunt circuit. The detection unit may be configured to receive an optical signal including a reflected signal of a laser transmit signal. The optical-to-electrical conversion unit may be configured to perform optical-to-electrical conversion on the received optical signal, to obtain a current signal including a first current signal. The shunt circuit may be configured to shunt the first current signal to obtain N second current signals used to generate N second voltage signals Vᵢ. N is an integer greater than or equal to 1, and i is an integer greater than or equal to 1 and less than or equal to N.

In this embodiment of this application, the shunt circuit is disposed in the detection apparatus. The shunt circuit may shunt the first current signal, to obtain the N second current signals. Each second current signal may generate one voltage signal, so that the detection apparatus may output a plurality of voltage signals. In this way, when the detection apparatus detects a reflected signal with a high luminous intensity, voltage signals obtained after the detection apparatus processes the current signal corresponding to the reflected signal are not saturated (namely, within a value range of voltage signals that can be received by a next-stage processing circuit), thereby effectively increasing a luminous intensity range of reflected signals that can be detected by the detection apparatus.

It should be noted that, the "reflected signal with a high luminous intensity" may be understood as that the luminous intensity of the current reflected signal exceeds the luminous intensity range of the reflected signals that can be detected by the detection apparatus. It should be understood that a laser includes infrared light, ultraviolet light, and the like. Correspondingly, different laser detection apparatuses can detect reflected signals of different luminous intensity ranges. For example, a luminous intensity range of reflected signals that can be detected by an infrared light detection apparatus is from 500 cd to 5,000 cd. For another example, a luminous intensity range of reflected signals that can be detected by an ultraviolet light detection apparatus is from 100 cd to 1,000 cd.

The following describes an application scenario of the detection apparatus provided in this embodiment of this application with reference to specific examples.

In a possible implementation, the detection apparatus may be a laser detection apparatus. For example, for a vehicle having an autonomous driving mode or an assisted driving mode, the laser detection apparatus may be mounted on the vehicle. In this way, in a traveling process of the vehicle, the laser detection apparatus may detect a laser signal reflected by a target object. The laser detection apparatus can determine a current signal corresponding to the laser signal, shunt the current signal to obtain a plurality of current signals, and process the plurality of current signals to obtain a plurality of voltage signals. In this way, the laser detection apparatus can output a plurality of voltage signals, so that the voltage signals output by the laser detection apparatus are not saturated. Therefore, when detecting a reflected signal with a high luminous intensity, the laser detection apparatus can also accurately obtain information about a distance between the target object and the laser detection apparatus and/or intensity information of the laser signal reflected by the target object, thereby effectively increasing a luminous intensity range of reflected signals that can be detected by the laser detection apparatus, and further determining more obstacles on a pavement by the laser detection apparatus. In this way, the vehicle can optimize a traveling trajectory of the vehicle, thereby effectively improving safety of autonomous driving or assisted driving.

Further, if the laser detection apparatus is an infrared light detection apparatus, the laser detection apparatus may further have another application scenario. For example, for an uncrewed aerial vehicle, the infrared light detection apparatus may be mounted on the uncrewed aerial vehicle. In this way, in a flight process of the uncrewed aerial vehicle, the infrared light detection apparatus may detect an infrared light signal reflected by a target object. The infrared light detection apparatus shunts a current signal generated by the infrared light signal, to obtain a plurality of current signals, thereby generating a plurality of voltage signals and effectively avoiding voltage signals output by the infrared light detection apparatus from being saturated. In this case, the infrared light detection apparatus can accurately determine a distance between the target object and the infrared light detection apparatus based on the infrared light signal, so that when the uncrewed aerial vehicle enters a danger range (that is, the target object in the danger range is detected), an alarm may be generated for the uncrewed aerial vehicle.

It should be understood that the laser detection apparatus may also be an ultraviolet light detection apparatus, a visible light detection apparatus, or the like. Examples are not described herein again.

It should be noted that the detection apparatus disclosed in this embodiment of this application may be applied to a terminal device having a signal processing capability. In some embodiments of this application, the detection apparatus may be a terminal device or an independent unit. When the detection apparatus is an independent unit, the unit may be embedded in a terminal device. In this way, when the detection apparatus detects a reflected signal with a large luminous intensity, the terminal device may shunt a current signal corresponding to the reflected signal, so that voltage signals output by the detection apparatus are not saturated (namely, within a value range of voltage signals that can be received by a next-stage processing circuit), thereby effectively increasing a luminous intensity range of reflected signals that can be detected by the detection apparatus. The terminal device may be an intelligent device having a signal processing capability, including but not limited to: a smart home device, such as a television, a robotic vacuum cleaner, a smart desk lamp, a speaker system, an intelligent lighting system, an electrical control system, home background music, a home theater system, an intercom system, or video surveillance; an intelligent transportation device, such as a vehicle, a ship, an uncrewed aerial vehicle, a train, a wagon, or a truck; and an intelligent manufacturing device, such as a robot or an industrial device. Alternatively, the terminal device may be a computer device having a signal processing capability, such as a desktop computer, a personal computer, or a server. It should be further understood that the terminal device may alternatively be a portable electronic device having a shunting capability, such as a mobile phone, a tablet computer, a palmtop computer, a headset, a speaker, a wearable device (such as a smart watch), a vehicle-mounted device, a virtual reality device, or an augmented reality device.

The following describes a structure of the detection apparatus provided in this embodiment of this application with reference to specific accompanying drawings.

It should be noted that "coupling" in the following embodiment of this application may be an electrical connection, and an electrical connection between two electrical elements may be a direct or indirect connection between the two electrical elements. For example, a connection between A and B may be either a direct connection between A and B, or an indirect connection between A and B through one or more other electrical elements. For example, the connection between A and B may be that A and C are directly connected, C and B are directly connected, and A and B are connected through C. In short, coupling between A and B enables electric energy to be transmitted between A and B.

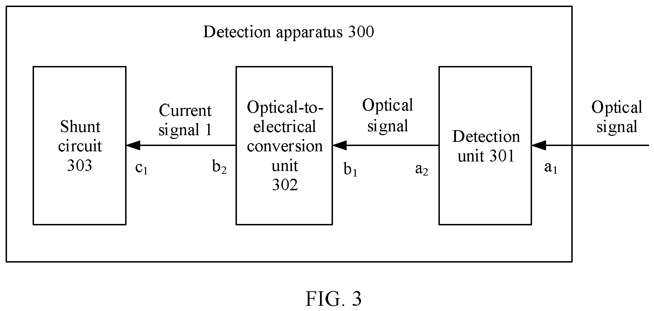

For example, FIG. 3 is a schematic diagram of a circuit structure of a detection apparatus according to an embodiment of this application. As shown in FIG. 3, the detection apparatus may include a detection unit 301, an optical-to-electrical conversion unit 302, and a shunt circuit 303.

An input end a₁ of the detection unit 301 is configured to receive an optical signal. An output end a₂ of the detection unit 301 is coupled to an input end b₁ of the optical-to-electrical conversion unit 302, and is configured to input the received optical signal to the optical-to-electrical conversion unit 302. An output end b₂ of the optical-to-electrical conversion unit 302 is coupled to an input end c₁ of the shunt circuit 303.

In a possible implementation, the optical signal includes a reflected signal of a laser transmit signal. The optical-to-electrical conversion unit 302 may be configured to perform optical-to-electrical conversion on the received optical signal to obtain a current signal 1, and input the current signal 1 to the shunt circuit 303. The current signal 1 includes a first current signal. The shunt circuit 303 may be configured to shunt the first current signal to obtain N second current signals used to generate N second voltage signals. N is an integer greater than or equal to 1. In this implementation, because the shunt circuit 303 may shunt the first current signal, one or more second voltage signals are generated, so that voltage signals corresponding to optical signals with a high luminous intensity detected by the detection apparatus are not saturated (namely, within a value range of voltage signals that can be received by a next-stage processing circuit), and a luminous intensity range of reflected signals that can be detected by the detection apparatus is effectively increased.

It should be noted that the shunt circuit 303 shunts the first current signal in a plurality of implementations, including but not limited to the following:

Manner 1: The shunt circuit 303 may shunt the first current signal based on N preset first control signals to obtain N second current signals used to generate N second voltage signals Vᵢ.

It should be noted that "each preset first control signal" corresponds to a preset bias voltage, and the preset bias voltage is a bias voltage preconfigured in the shunt circuit 303 when technical personnel design the shunt circuit 303. A quantity of N is not specifically limited in this embodiment of this application.

For example, N is 4, and the shunt circuit 303 may shunt the first current signal based on four preset first control signals to obtain four second current signals, and then may obtain four second voltage signals V₁, V₂, V₃, and V₄ based on the four current signals.

It may be understood that the N preset first control signals are in a one-to-one correspondence with the N second current signals. In other words, one second current signal may be obtained by shunting the first current signal based on a bias voltage corresponding to one first control signal. For example, if a first control signal 1 corresponds to a bias voltage VB₁, the shunt circuit 303 may shunt the first current signal based on the bias voltage VB₁, to obtain a second current signal 1. For another example, if a first control signal 2 corresponds to a bias voltage VB₂, the shunt circuit 303 may shunt the first current signal based on the bias voltage VB₂, to obtain a second current signal 2. For still another example, if a first control signal 3 corresponds to a bias voltage VB₃, the shunt circuit 303 may shunt the first current signal based on the bias voltage VB₃, to obtain a second current signal 3.

In Manner 1, the shunt circuit 303 directly shunts the first current signal based on the preset first control signals, thereby effectively improving shunting efficiency of the shunt circuit 303.

Manner 2: The shunt circuit 303 may shunt the first current signal based on N preset first control signals to obtain N second current signals used to generate N second voltage signals Vᵢ. Then, the shunt circuit 303 further shunts the first current signal based on received N second control signals to obtain N fourth current signals used to generate N third voltage signals V_{i'}.

It should be noted that the "received N second control signals" may be received by the shunt circuit 303 from a next-stage processing circuit. The next-stage processing circuit may be an external processing circuit of the detection apparatus 300 or an internal processing circuit of the detection apparatus 300. One received second control signal may correspond to one bias voltage VB_{i'}, and received N second control signals correspond to N bias voltages. Current values corresponding to the N second current signals are different from current values corresponding to the fourth current signals, and voltage values corresponding to the N second voltage signals are different from voltage values corresponding to the N third voltage signals.

It may be understood that the received N second control signals are in a one-to-one correspondence with the N fourth current signals. In other words, one fourth current signal may be obtained by shunting the first current signal based on a bias voltage corresponding to one second control signal. For example, if a second control signal 1 corresponds to a bias voltage VB_{1'}, the shunt circuit 303 may shunt the first current signal based on the bias voltage VB_{1'}, to obtain a fourth current signal 1. For another example, if a second control signal 2 corresponds to a bias voltage VB_{2'}, the shunt circuit 303 may shunt the first current signal based on the bias voltage VB_{2'}, to obtain a fourth current signal 2. For still another example, if a second control signal 3 corresponds to a bias voltage VB_{3'}, the shunt circuit 303 may shunt the first current signal based on the bias voltage VB_{3'}, to obtain a fourth current signal 3. For descriptions of the first control signal, refer to related descriptions in Manner 1.

The N second control signals are determined after the N first control signals are determined.

In a possible implementation, after obtaining the N second current signals based on the N first control signals, the shunt circuit 303 may convert the N second current signals into the N second voltage signals, and output the N second voltage signals to a next-stage processing circuit. The next-stage processing circuit may determine the N bias voltages corresponding to the N second control signals based on the N second voltage signals. A larger voltage value corresponding to the second voltage signal indicates a larger bias voltage value that is corresponding to the second control signal and that is set by the next-stage processing circuit.

For example, there is a mapping relationship between the voltage value corresponding to the second voltage signal and the bias voltage value corresponding to the second control signal, as shown in Table 1. The next-stage processing circuit may determine the bias voltage value corresponding to the second control signal based on the mapping relationship. For example, if a voltage value corresponding to a second voltage signal 1 is 80 V, a bias voltage corresponding to a second control signal 1 is 75 V; if a voltage value corresponding to a second voltage signal 2 is 50 V, a bias voltage corresponding to a second control signal 2 is 55 V; and if a voltage value corresponding to a second voltage signal 3 is 30 V, a bias voltage corresponding to a second control signal 3 is 35 V

**Table 1**

| Voltage value (v) corresponding to a second voltage signal | Bias voltage value (v) corresponding to a second control signal |
|---|---|
| 80 | 75 |
| 50 | 55 |
| 30 | 35 |

It may be understood that the mapping relationship in Table 1 is merely an example, and is not limited. More mapping relationships may exist between the voltage value corresponding to the second voltage signal and the bias voltage value corresponding to the second control signal, provided that the voltage value corresponding to the second voltage signal is directly proportional to the bias voltage value corresponding to the second control signal.

The following describes the technical solution of Manner 2 with reference to a complete example.

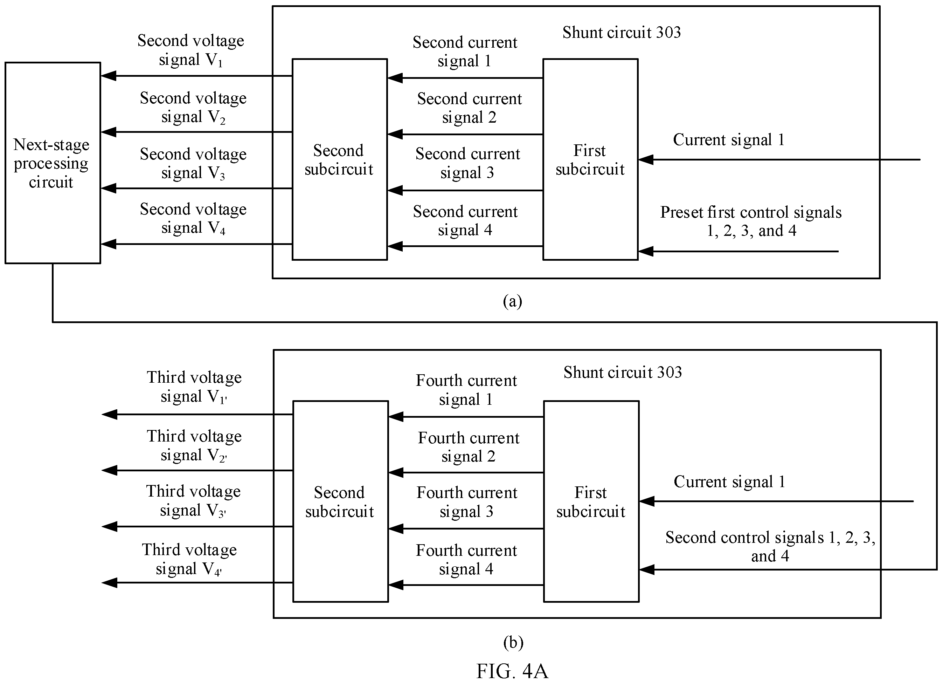

For example, FIG. 4A is a schematic diagram of a possible structure of a shunt circuit 303. For example, N is 4, and the shunt circuit 303 in FIG. 4A includes a first subcircuit and a second subcircuit. As shown in (a) in FIG. 4A, the first subcircuit in the shunt circuit 303 may receive a current signal 1, shunt a first current signal in the current signal 1 based on four preset first control signals to obtain four second current signals, and input the four second current signals to the second subcircuit in the shunt circuit 303. The second subcircuit in the shunt circuit 303 obtains four second voltage signals, V₁, V₂, V₃, and V₄, based on the four second current signals, and inputs the four second voltage signals to a next-stage processing circuit. The next-stage processing circuit determines four second control signals based on the four second voltage signals and mapping relationships between voltage values corresponding to the second voltage signals and bias voltage values corresponding to the second control signals, and inputs the four second control signals to the first subcircuit in the shunt circuit 303. As shown in (b) in FIG. 4A, the first subcircuit in the shunt circuit 303 may shunt the first current signal again based on the four second control signals to obtain four fourth current signals, and input the four fourth current signals to the second subcircuit in the shunt circuit 303. The second sub circuit in the shunt circuit 303 obtains four third voltage signals, V_{1'}, V_{2'}, V_{3'}, and V_{4'} based on the four second current signals, and inputs the four third voltage signals to the next-stage processing circuit.

In Manner 2, after shunting the first current signal based on the N preset first control signals to obtain the N second current signals, and converting the N second current signals into the N second voltage signals, the shunt circuit 303 may further shunt the first current signal again based on the N second control signals, to obtain the N fourth current signals. The N second control signals are dynamically determined based on the N second voltage signals, so that the third voltage signals determined based on the fourth current signals obtained through shunting can better adapt to a voltage receiving range of a next-stage processing circuit.

It should be understood that the N second voltage signals or the N third voltage signals may be used to determine distance information of a target object generating a reflected signal and/or intensity information of an optical signal.

The following describes an implementation of the shunt circuit 303 with reference to a specific example.

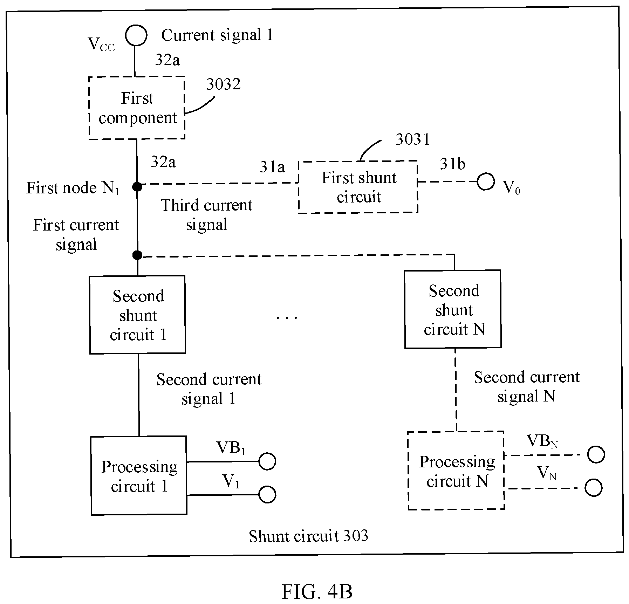

FIG. 4B is a schematic diagram of a possible structure of a shunt circuit 303. In FIG. 4B, the shunt circuit 303 may include: a first node N₁, N second shunt circuits (namely, second shunt circuits 1 to N), and N processing circuits (namely, a processing circuit 1, a processing circuit 2, ..., and a processing circuit N). The first node N₁ is coupled to each input end of the N second shunt circuits, and output ends of the N second shunt circuits are respectively coupled to input ends of the N processing circuits. N is an integer greater than or equal to 1.

It should be understood that the first node N₁ is an electrical node formed by connecting the N second shunt circuits, and is a connection point of the N second shunt circuits in actual hardware. The first node N₁ may be configured to input a first current signal to the N second shunt circuits, and then each of the N second shunt circuits may shunt the first current signal to obtain N second current signals. Each second shunt circuit may input the second current signal obtained through shunting to a processing circuit corresponding to the second shunt circuit, and then the processing circuit may process the second current signal to generate a second voltage signal. Correspondingly, the N processing circuits may process the N second current signals to obtain N second voltage signals.

It should be understood that the N second shunt circuits may be in a one-to-one correspondence with the N processing circuits. For example, a second shunt circuit 1 corresponds to a processing circuit 1, a second shunt circuit 2 corresponds to a processing circuit 2, and by analogy, a second shunt circuit N corresponds to a processing circuit N.

For example, the second shunt circuit 1 may shunt the first current signal to obtain a second current signal I₁, and input the second current signal I₁ to the corresponding processing circuit 1, and then the processing circuit 1 may process the second current signal I₁ to generate a second voltage signal V₁.

For another example, the second shunt circuit 2 may shunt the first current signal to obtain a second current signal I₂, and input the second current signal I₂ to the corresponding processing circuit 2, and then the processing circuit 2 may process the second current signal I₂ to generate a second voltage signal V₂.

For still another example, the second shunt circuit N may shunt the first current signal to obtain a second current signal Iₙ, and input the second current signal Iₙ to the corresponding processing circuit N, and then the processing circuit N may process the second current signal Iₙ to generate a second voltage signal V_{N}.

As shown in FIG. 4B, the processing circuit 1 to the processing circuit N further include control signal input ends VB₁ to VB_{N}. The processing circuit 1 to the processing circuit N may input corresponding control signals into the N second shunt circuits, and then the N second shunt circuits may shunt the first current based on the control signals.

Correspondingly, the N second shunt circuits shunt the first current signal in a plurality of implementations, including but not limited to the following:
Manner 1: The N second shunt circuits may shunt the first current signal based on N preset first control signals to obtain N second current signals used to generate N second voltage signals.

It should be noted that the N second shunt circuits are in a one-to-one correspondence with the N preset first control signals, and the N preset first control signals are in a one-to-one correspondence with the N second current signals. In other words, one second shunt circuit may shunt the first current signal based on a bias voltage corresponding to one first control signal, to obtain one second current signal.

For example, a second shunt circuit 1 may shunt the first current signal based on a bias voltage VB₁ corresponding to a first control signal 1, to obtain a second current signal 1. For another example, a second shunt circuit 2 may shunt the first current signal based on a bias voltage VB₂ corresponding to a first control signal 2, to obtain a second current signal 2. For still another example, a second shunt circuit 3 may shunt the first current signal based on a bias voltage VB₃ corresponding to a first control signal 3, to obtain a second current signal 3.

One preset first control signal may correspond to one preset bias voltage, and the N preset first control signals correspond to N preset bias voltages. Values of the N preset bias voltages may be the same or different. This is not specifically limited in this embodiment of this application.

For example, values of a bias voltage 1 to a bias voltage N may all be 5 V Alternatively, values of a bias voltage 1 to a bias voltage 3 are 5 V, and values of a bias voltage 4 to a bias voltage Nare 10 V.

Optionally, a value of an N^{th} bias voltage among the N bias voltages may be twice a value of an (N+1)^{th} bias voltage.

For example, N is 1, 2, or 3. A value of the bias voltage VB₁ corresponding to the first control signal 1 is 20 V, a value of the bias voltage VB₂ corresponding to the first control signal 2 is 10 V, and a value of the bias voltage VB₃ corresponding to the first control signal 3 is 5 V

In Manner 1, the N second shunt circuits directly shunt the first current signal based on the preset first control signals, thereby effectively improving shunting efficiency of the N second shunt circuits.

Manner 2: The N second shunt circuits may shunt the first current signal based on N preset first control signals to obtain N second current signals used to generate N second voltage signals. Then, the N second shunt circuit further shunt the first current signal based on received N second control signals to obtain N fourth current signals used to generate N third voltage signals V_{i'}.

It may be understood that the N second shunt circuits are in a one-to-one correspondence with the received N second control signals, and the received N first control signals are in a one-to-one correspondence with the N fourth current signals. In other words, one second shunt circuit may shunt the first current signal based on a bias voltage corresponding to one second control signal, to obtain one fourth current signal. For example, a second shunt circuit 1 may shunt the first current signal based on a bias voltage VB₁ corresponding to a second control signal 1, to obtain a fourth current signal 1. For another example, a second shunt circuit 2 may shunt the first current signal based on a bias voltage VB₂ corresponding to a second control signal 2, to obtain a fourth current signal 2. For still another example, a second shunt circuit 3 may shunt the first current signal based on a bias voltage VB₃ corresponding to a second control signal 3, to obtain a fourth current signal 3.

It can be learned from the foregoing descriptions that a next-stage processing circuit may determine the N bias voltages corresponding to the N second control signals based on the N second voltage signals output by the shunt circuit 303. Correspondingly, the next-stage processing circuit may determine the N bias voltages corresponding to the N second control signals based on the N second voltage signals output by the N second shunt circuits. A larger voltage value corresponding to the second voltage signal indicates a larger bias voltage value that is corresponding to the second control signal and that is set by the next-stage processing circuit.

The following describes the technical solution of Manner 2 with reference to a specific example.

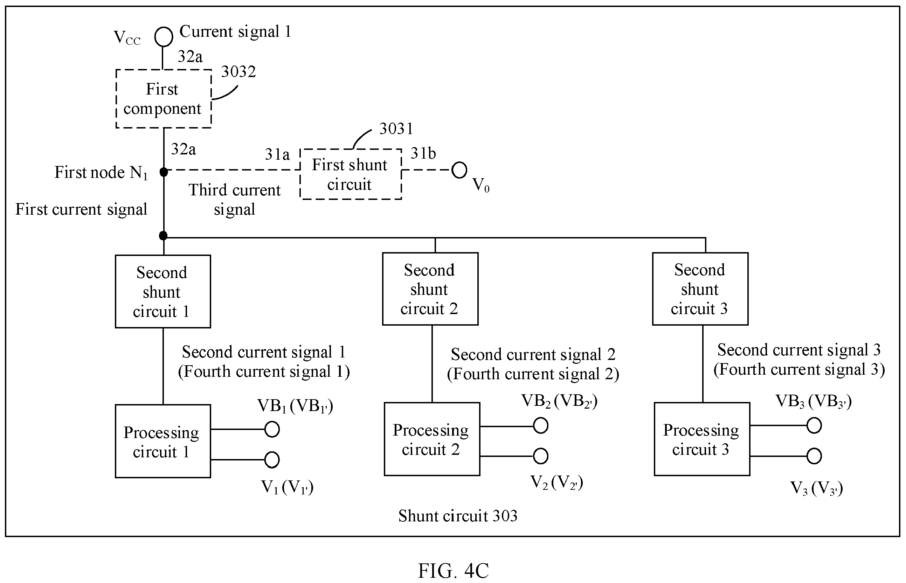

For example, with reference to FIG. 4C, N is 3, and a shunt circuit 303 includes a second shunt circuit 1, a second shunt circuit 2, a second shunt circuit 3, a processing circuit 1, a processing circuit 2, and a processing circuit 3. The first node N₁ inputs a first current signal to each of the second shunt circuit 1, the second shunt circuit 2, and the second shunt circuit 3. The second shunt circuit 1 shunts the first current signal based on a bias voltage VB₁ corresponding to a preset first control signal 1 to obtain a second current signal 1, and inputs the second current signal 1 to the processing circuit 1, and then the processing circuit 1 generates a second voltage signal V₁ based on the second current signal 1, and inputs the second voltage signal V₁ to a next-stage processing circuit. The second shunt circuit 2 shunts the first current signal based on a bias voltage VB₂ corresponding to a preset first control signal 2 to obtain a second current signal 2, and inputs the second current signal 2 to the processing circuit 2, and then the processing circuit 2 generates a second voltage signal V₂ based on the second current signal 2, and inputs the second voltage signal V₂ to a next-stage processing circuit. The second shunt circuit 3 shunts the first current signal based on a bias voltage VB₃ corresponding to a preset first control signal 3 to obtain a second current signal 3, and inputs the second current signal 3 to the processing circuit 3, and then the processing circuit 3 generates a second voltage signal V₃ based on the second current signal 3, and inputs the second voltage signal V₃ to a next-stage processing circuit.

The next-stage processing circuit determines a second control signal 1, a second control signal 2, and a second control signal 3 according to the second voltage signal V₁, the second voltage signal V₂, and the second voltage signal V₃. The next-stage processing circuit inputs the second control signal 1 to the processing circuit 1. The processing circuit 1 converts the second control signal 1 into a corresponding voltage signal VB_{1'}, and inputs the voltage signal VB_{1'} to the second shunt circuit 1. Then, the second shunt circuit 1 shunts the first current signal again based on the voltage signal VB_{1'} to obtain a fourth current signal 1, and inputs the fourth current signal 1 to the processing circuit 1. Then, the processing circuit 1 generates a third voltage signal V_{1'} based on the fourth current signal 1, and inputs the third voltage signal V_{1'} to a next-stage processing circuit.

The next-stage processing circuit inputs the second control signal 2 to the processing circuit 2. The processing circuit 2 converts the second control signal 2 into a corresponding voltage signal VB_{2'}, and inputs the voltage signal VB_{2'} to the second shunt circuit 2. Then, the second shunt circuit 2 shunts the first current signal again based on the voltage signal VB_{2'} to obtain a fourth current signal 2, and inputs the fourth current signal 2 to the processing circuit 2. Then, the processing circuit 2 generates a third voltage signal V_{2'} based on the fourth current signal 2, and inputs the third voltage signal V_{2'} to a next-stage processing circuit.

The next-stage processing circuit inputs the second control signal 3 to the processing circuit 3. The processing circuit 3 converts the second control signal 3 into a corresponding voltage signal VB_{3'}, and inputs the voltage signal VB_{3'} to the second shunt circuit 3. Then, the second shunt circuit 3 shunts the first current signal again based on the voltage signal VB_{3'} to obtain a fourth current signal 3, and inputs the fourth current signal 3 to the processing circuit 3. Then, the processing circuit 3 generates a third voltage signal V_{3'} based on the fourth current signal 2, and inputs the third voltage signal V_{3'} to a next-stage processing circuit.

In Manner 2, each of the N second shunt circuits first shunts the first current signal based on the preset first control signals, and then shunts the first current signal again based on the second control signals. The second control signals are dynamically determined based on the second voltage signals output by the second shunt circuits corresponding to the second control signals, so that the second shunt circuits can shunt the first current signal again and perform a quasi-conversion operation to obtain the third voltage signals which better adapt to a voltage receiving range of a next-stage processing circuit.

Optionally, still with reference to FIG. 4B, the shunt circuit 303 may further include a first shunt circuit 3031 and a first component 3032. An input end 32a of the first component 3032 may be configured to obtain the current signal 1. An input end 31a of the first shunt circuit 3031 is coupled to an output end 32b of the first component 3032 through a first node N₁. Then, the first shunt circuit 3031 may shunt a third current signal in the current signal to obtain the third current signal, convert the third current signal to obtain a first voltage signal V₀, and output the first voltage signal V₀ through an output end 31b of the first shunt circuit 3031.

In a possible implementation, the input end 32a of the first component 3032 may be coupled to a power supply Vcc of a detection apparatus 300, and the current signal 1 is obtained through the power supply Vcc. In another possible implementation, the input end 32a of the first component 3032 may be further coupled to an output end b2 of an optical-to-electrical conversion unit 302, to receive the current signal 1 from the optical-to-electrical conversion unit 302.

It should be understood that, when the shunt circuit 303 may further include the first shunt circuit 3031 and the first component 3032, the first node N₁ may further be an electrical node formed by connecting the N second shunt circuits, the first shunt circuit 3031, and the first component 3032. In actual hardware, the first node N₁ is a connection point of the N second shunt circuits, the first shunt circuit 3031, and the first component 3032.

In a possible implementation, a current value of the current signal is greater than a preset threshold, and a current value of the third current signal is less than the preset threshold. In other words, the first shunt circuit 3031 shunts some current signals that are less than the preset threshold and that are in the current signal obtained by the first component, to obtain the third current signal, so that the some current signals can be quickly output.

In a possible implementation, the first voltage signal V₀ may be used to determine distance information of a target object generating a reflected signal and/or intensity information of an optical signal. In this way, the distance information of the target object and/or the intensity information of the optical signal that are/is determined by the detection apparatus are/is more accurate.

With reference to specific accompanying drawings, the following describes possible implementations of each part of the shunt circuit 303.

### 1. First shunt circuit in the shunt circuit 303

In a possible implementation, the first shunt circuit may include a first amplifier. The first amplifier may be one or more amplifiers. That is, the first shunt circuit may include one or more amplifiers. This is not specifically limited in this embodiment of this application.

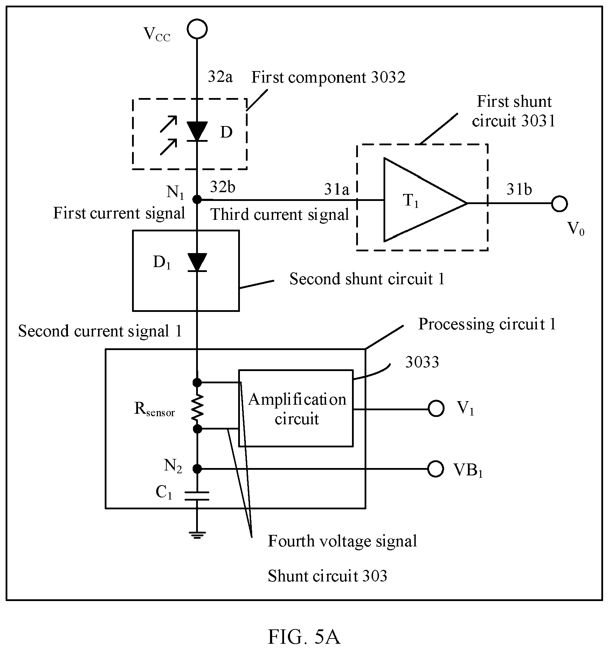

For example, with reference to FIG. 5A, an amplifier T₁ in FIG. 5A is used as an example of the first amplifier. The first shunt circuit 3031 includes the amplifier T₁. An input end of the amplifier T₁ is an input end 31a of a first shunt circuit 3031, and an output end of the amplifier T₁ is an output end 31b of the first shunt circuit 3031. Then, the amplifier T₁ may be configured to shunt a third current signal to obtain the third current signal, and convert the third current signal to obtain a first voltage signal V₀.

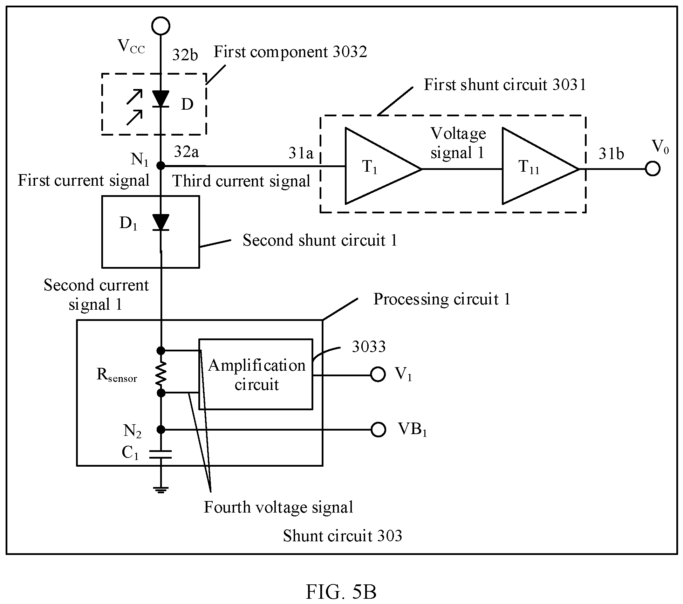

For another example, with reference to FIG. 5B, an amplifier T₁ and an amplifier T₁₁ in FIG. 5B are used as an example of the first amplifier. An input end of the amplifier T₁ is an input end 31a of a first shunt circuit 3031, an output end of the amplifier T₁ is coupled to an input end of the amplifier T₁₁, and an output end of the amplifier T₁₁ is an output end 31b of the first shunt circuit 3031. Then, the amplifier T₁ may be configured to shunt a third current signal to obtain the third current signal, convert the third current signal to obtain a corresponding voltage signal 1, and input the voltage signal 1 to the amplifier T₁₁. The amplifier T₁₁ amplifies the voltage signal 1 again to obtain a first voltage signal V₀.

It may be understood that the foregoing example is merely an example for describing the first shunt circuit 3031. In another possible embodiment, there may be more amplifiers in the first shunt circuit 3031.

### 2. First component

In a possible implementation, the first component 3032 may be an optical-to-electrical converter D. An input end 32a of the first component 3032 is an input end of the optical-to-electrical converter D. An output end 32b of the first component 3032 is an output end of the optical-to-electrical converter D. Then, the optical-to-electrical converter D may receive an optical signal and convert the optical signal into the current signal.

For example, still with reference to FIG. 5A or FIG. 5B, the input end of the optical-to-electrical converter D is configured to receive an optical signal (namely, a reflected signal of a target object), convert the optical signal into the current signal, input a first current signal in the current signal to a second shunt circuit 1 through a first node N₁, and input the third current signal in the current signal to the first shunt circuit through the first node N₁.

It should be noted that, in some other embodiments, the first component 3032 may alternatively be an acoustic-electric conversion component, a magneto-electric conversion component, or the like.

### 3. N second shunt circuits in the shunt circuit 303

In a possible implementation, the N second shunt circuits may be implemented by using discharge circuits D₁ to D_{N} To be specific, the second shunt circuit 1 may include a discharge circuit D₁, a second shunt circuit 2 may include a discharge circuit D₂, a second shunt circuit 3 may include a discharge circuit D₃, ..., and so on, and the second shunt circuit N may include a discharge circuit D_{N}. The discharge circuits D₁ to D_{N} may be implemented by using an equivalent diode. It may be understood that in embodiments of this application, the "equivalent diode" is a component having a conductive function of a diode. For example, the equivalent diode may be any one of a diode, a MOS transistor, or a transistor. This is not specifically limited in this embodiment of this application.

For example, still with reference to FIG. 5A or FIG. 5B, a second shunt circuit is used as an example in FIG. 5A or FIG. 5B. The second shunt circuit 1 may include an equivalent diode D₁. An input end of the equivalent diode D₁ is coupled to the first node N₁, and an output end of the equivalent diode D₁ is coupled to an input end of a processing circuit 1. Then, the second shunt circuit 1 may shunt the first current signal to obtain a second current signal, and input the second signal to the processing circuit 1.

It should be understood that the foregoing example is merely an example for describing the second shunt circuit, and does not constitute a limitation. In other embodiments, there may be more second shunt circuits. Correspondingly, specific implementations of other second shunt circuits are similar to a specific implementation of the second shunt circuit 1, and details are not described herein again.

### 4. N processing circuits in the shunt circuit 303

In a possible implementation, each of the N processing circuits may include a first resistor Rₛₑₙₛₒᵣ, a second node N₂, a first capacitor C₁, and an amplification circuit.

It should be understood that the second node N₂ is an electrical node formed by connecting a control signal input end (VB₁) of the processing circuit and an internal component of the processing circuit. In actual hardware, the second node N₂ is a connection point of the component, for example, a connection point of the first resistor Rₛₑₙₛₒᵣ, the first capacitor C₁, and the amplification circuit.

For example, still with reference to FIG. 5A or FIG. 5B, the processing circuit 1 in FIG. 5A or FIG. 5B may include the first resistor Rₛₑₙₛₒᵣ, the second node N₂, the first capacitor C₁, and the amplification circuit 3033. The first resistor Rₛₑₙₛₒᵣ may convert a second current signal 1 received by the first resistor Rₛₑₙₛₒᵣ from the second shunt circuit 1, to obtain a corresponding fourth voltage signal, and input the fourth voltage signal to the amplification circuit 3033. The amplification circuit 3033 amplifies the fourth voltage signal to obtain a second voltage signal V₁ and outputs the second voltage signal V₁.

It should be understood that the foregoing example is merely an example for describing the processing circuit, and does not constitute a limitation. In other embodiments, there may be more second shunt circuits. Correspondingly, specific implementations of other processing circuits are similar to a specific implementation of the processing circuit 1, and details are not described herein again.

It should be noted that the amplification circuit 3033 has a plurality of implementations, including but not limited to the following:
Implementation 1: The amplification circuit 3033 is implemented by using a first amplification circuit.

The first amplification circuit may include one or more amplifiers. In other words, the first amplification circuit may be a single-stage amplification circuit, or may be a multi-stage amplification circuit.

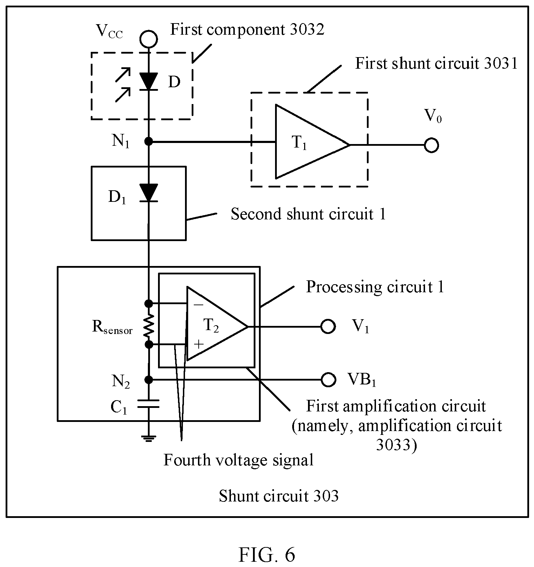

For example, with reference to FIG. 6, a single-stage amplification circuit in FIG. 6 is used as an example of the first amplification circuit. That is, the first amplification circuit includes a second amplifier T₂. That is, the amplification circuit 3033 is implemented by using the second amplifier T₂. The second amplifier T₂ may receive a fourth voltage signal from a first resistor Rₛₑₙₛₒᵣ, amplify the fourth voltage signal to obtain a second voltage signal V₁, and output the second voltage signal V₁.

In Implementation 1, a structure of the amplification circuit 3033 is simple, and implementation complexity of the processing circuits is effectively reduced.

Implementation 2: The amplification circuit 3033 includes a logarithmic amplification circuit and a second amplification circuit. An input end of the logarithmic amplification circuit is coupled to the first resistor Rₛₑₙₛₒᵣ, and an output end of the logarithmic amplification circuit is coupled to an input end of the second amplification circuit. The logarithmic amplification circuit is configured to amplify the fourth voltage signal to obtain a fifth voltage signal. The second amplification circuit may be configured to amplify the fifth voltage signal to obtain the second voltage signal V₁.

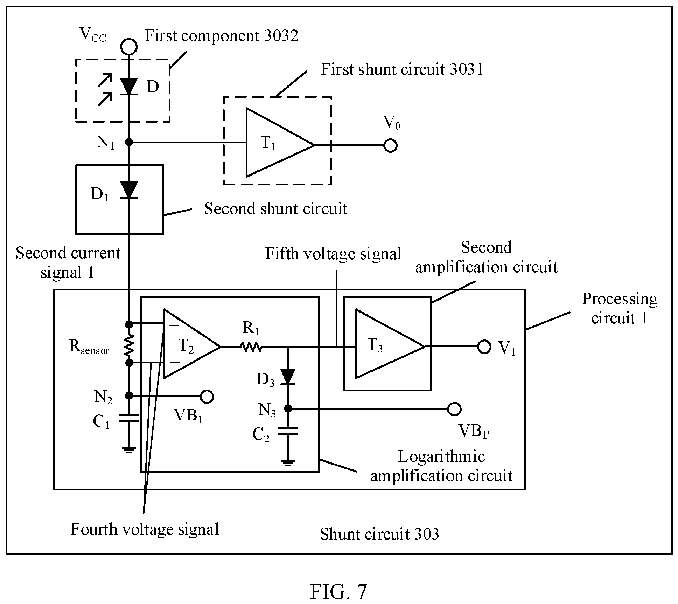

For example, with reference to FIG. 7, the logarithmic amplification circuit may include a second amplifier T₂, a second resistor R₁, an equivalent diode D₃, a third node N₃, and a second capacitor C₂. The second amplification circuit includes a third amplifier T₃. One end of the second resistor R₁ is coupled to an output end of the second amplifier T₂, and the other end is coupled to both an input end of the equivalent diode D₃ and an input end of the third amplifier T₃. One end of the second capacitor C₂ is coupled to an output end of the equivalent diode D₃ through the third node N₃, and the other end is grounded. In this way, the second amplifier T₂ may perform logarithmic amplification on a fourth voltage signal output by the first resistor Rₛₑₙₛₒᵣ to obtain a fifth voltage signal, and input the fifth voltage signal to the third amplifier T₃. The third amplifier T₃ may be configured to amplify the fifth voltage signal, to obtain a second voltage signal V₁.

It should be understood that the third node N₃ is an electrical node formed by connecting another control signal input end (VB_{1'}) of a processing circuit 1 and an internal component of the processing circuit 1. In actual hardware, the third node N₃ is a connection point of the component, for example, a connection point of the second capacitor C₂, the equivalent diode D₃, and the control signal input end (VB_{1'}). The equivalent diode D₃ is a component having a conducting function of a diode. For example, the equivalent diode D₃ may be any one of a diode, a MOS transistor, or a transistor. This is not specifically limited in this embodiment of this application.

It should be understood that the foregoing example is merely an example for describing the logarithmic amplification circuit and the second amplification circuit, and does not constitute a limitation. In another embodiment, the logarithmic amplification circuit and the second amplification circuit may further include more amplifiers.

In Implementation 2, the logarithmic amplification circuit is designed in the amplification circuit, so that the amplification circuit can perform logarithmic amplification on the second voltage signal, thereby effectively improving a dynamic range (namely, a range of an output voltage) of the amplification circuit.

It should be noted that the shunt circuit 303 may further be applied to another detection apparatus. This is merely an example, but not a limitation.

It should be noted that both the first voltage signal V₀ and the second voltage signal V₁ may be used to determine a distance signal of a target object and/or intensity information of a reflected signal of the target object.

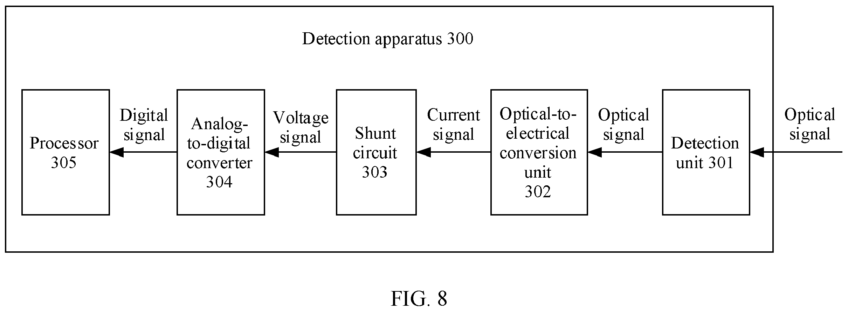

In some embodiments, as shown in FIG. 8, the detection apparatus 300 further includes an analog-to-digital converter 304 and a processor 305. An input end of the analog-to-digital converter 304 is connected to an output end of the shunt circuit 303, and an output end of the analog-to-digital converter 304 is connected to an input end of the processor 305. The analog-to-digital converter 304 is configured to convert a voltage signal (namely, the first voltage signal V₀ and the second voltage signal V₁) into a second digital signal, and output the second digital signal to the processor 305. The processor 305 may determine distance information of a target object and/or intensity information of a reflected signal of the target object based on the second digital signal.

For example, the processor 305 may obtain a moment at which a first digital electrical signal (a drive signal used when a transmit signal corresponding to the reflected signal is transmitted) starts to be output and a moment at which the second digital electrical signal starts to be received, and determine a first time difference between the two moments. The first time difference may be subtracted from a constant time spent in operating a detection unit 301, an optical-to-electrical conversion unit 302, the shunt circuit 303, and the analog-to-digital converter 30. In this way, a second time difference between a moment at which a laser signal is transmitted by a laser transmitter and a moment at which the detection apparatus 300 receives the reflected signal may be obtained. Then, the processor 305 may determine a distance between the laser detection apparatus and the target object and the luminous intensity information of the reflected signal based on the second time difference.

Optionally, the processor 305 may determine the N second control signals based on the digital signal, and send the N second control signals to the shunt circuit 303, so that the shunt circuit 303 may shunt, based on the N second control signals, a current signal received from the optical-to-electrical conversion unit 302.

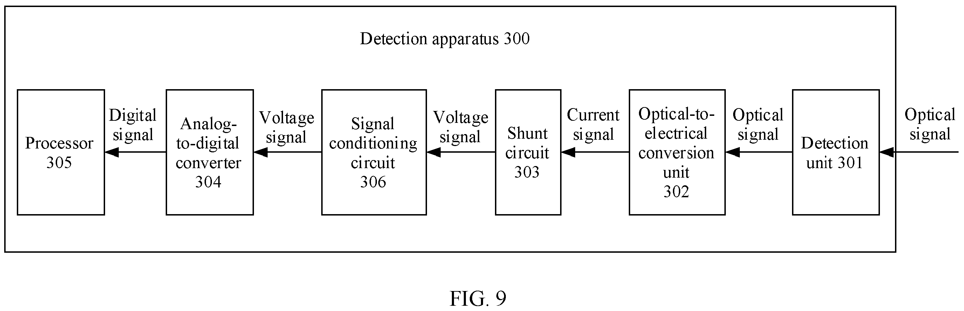

Optionally, with reference to FIG. 9, the detection apparatus 300 may further include a signal conditioning circuit 306, and the signal conditioning circuit 306 may be connected in series between the shunt circuit 303 and the analog-to-digital converter 304. In this way, the signal conditioning circuit 306 may filter out some interference signals in the voltage signals, so that the voltage signals received by the analog-to-digital converter 304 are more accurate.

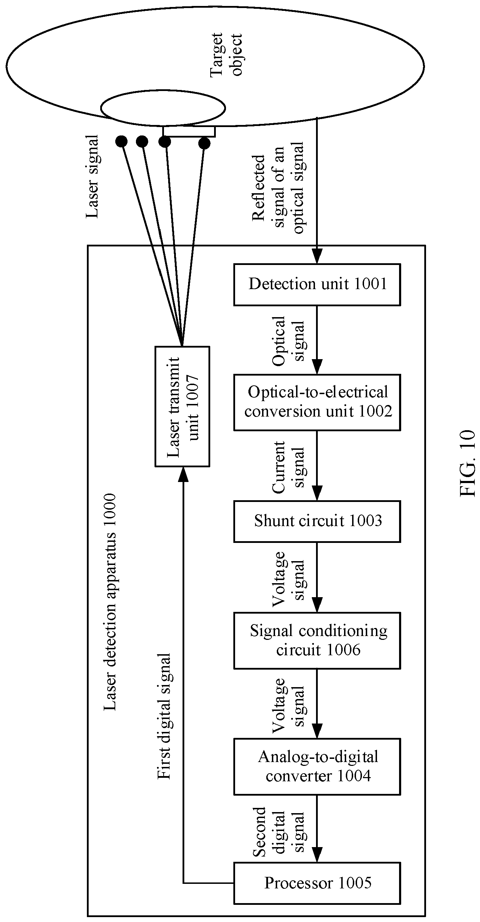

FIG. 10 is an example of a laser detection apparatus according to an embodiment of this application. A complete description of this embodiment of this application is made in the following based on FIG. 10.

The laser detection apparatus 1000 shown in FIG. 10 includes a detection unit 1001, an optical-to-electrical conversion unit 1002, a shunt circuit 1003, an analog-to-digital converter 1004, a processor 1005, a signal conditioning circuit 1006, and a laser transmit unit 1007.

An output end of the detection unit 1001 is connected to an input end of the optical-to-electrical conversion unit 1002. An output end of the optical-to-electrical conversion unit 1002 is connected to an input end of the shunt circuit 1003. An output end of the shunt circuit 1003 is connected to an input end of the signal conditioning circuit 1006. An output end of the signal conditioning circuit 1006 is connected to an input end of the analog-to-digital converter 1004. An output end of the analog-to-digital converter 1004 is connected to the processor 1005. The processor 1005 is connected to the laser transmit unit 1007.

The processor 1005 may send a first digital signal to the laser transmit unit 1007, and the laser transmit unit 1007 may transmit a laser signal to a target object under driving of the first digital signal. The detection unit 1001 may detect an optical signal reflected by the target object, and input the optical signal to the optical-to-electrical conversion unit 1002. The optical-to-electrical conversion unit 1002 may be configured to perform optical-to-electrical conversion on the received optical signal to obtain a current signal, and input the current signal to the shunt circuit 1003. The current signal includes a first current signal and a third current signal. The shunt circuit 1003 may shunt the first current signal to obtain N second current signals, and generate N second voltage signals based on the N second current signals. The shunt circuit 1003 may shunt the third current signal to obtain the third current signal, and determine a first voltage signal based on the third current signal.

Further, the shunt circuit 1003 inputs the first voltage signal and the N second voltage signals to the analog-to-digital converter 1004. The analog-to-digital converter 1004 converts the first voltage signal and the N second voltage signals to obtain a second digital signal, and inputs the second digital signal to the processor 1005.

The processor 1005 may determine information about a distance between the target object and the laser detection apparatus 1000 and intensity information of a reflected signal based on the second digital signal.

In this embodiment, the shunt circuit 1003 may shunt the first current signal to generate one or more second voltage signals, so that voltage signals corresponding to optical signals with a high luminous intensity detected by the detection apparatus are not saturated. In this way, the detection apparatus may accurately calculate the distance between the target object and the detection apparatus and the intensity information of the optical signal, and a luminous intensity range of reflected signals that can be detected by the detection apparatus is effectively increased.

It should be noted that the "connection" in this embodiment of this application may be a direct connection. Optionally, in another possible situation, the connection may not be a direct connection, but may be performed by using some components. This is not limited in this embodiment of this application.

An embodiment of this application further provides a sensor system. The sensor system includes one or more of the foregoing detection apparatuses. Optionally, the sensor system may further include one or more of a millimeter-wave radar, a camera apparatus, and the like. There may be one or more millimeter-wave radars, and there may also be one or more camera apparatuses.

An embodiment of this application further provides a vehicle. The vehicle carries the foregoing sensor system. Optionally, the vehicle may further include a braking system, a control system, and the like. The sensor system is configured to detect a distance between the vehicle and another object. The control system is configured to send a control instruction based on a distance detected by the sensor system. The braking system is configured to execute the control instruction sent by the control system.

An embodiment of this application further provides an uncrewed aerial vehicle device. The uncrewed aerial vehicle device carries the foregoing sensor system. Optionally, the uncrewed aerial vehicle device may further include a braking system, a control system, and the like. The sensor system is configured to detect a distance between the uncrewed aerial vehicle device and another object. The control system is configured to send a control instruction based on a distance detected by the sensor system. The braking system is configured to execute the control instruction sent by the control system.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a disk memory, a CD-ROM, an optical memory, and the like) that include computer-usable program code.

This application is described with reference to the flowcharts and/or the block diagrams of the method, the device (system), and the computer program product according to this application. It should be understood that each procedure and/or block in the flowcharts and/or block diagrams, and combinations of the procedures and/or blocks in the flowcharts and/or block diagrams may be implemented by computer program instructions. These computer program instructions may be provided to a processor of a general-purpose computer, a special-purpose computer, an embedded processor, or another programmable data processing device to generate a machine, such that the instructions executed by the processor of the computer or another programmable data processing device generate an apparatus for implementing a specific function in one or more procedures in the flowcharts and/or one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Apparently, a person skilled in the art can make various modifications and variations to this application without departing from the protection scope of this application. In this way, if these changes and variations to this application fall within the scope of the claims of this application and equivalent technologies thereof, this application is also intended to include these changes and variations.

## Claims

1. A detection apparatus, comprising a detection unit, an optical-to-electrical conversion unit, and a shunt circuit, wherein
the detection unit is configured to receive an optical signal comprising a reflected signal of a laser transmit signal;
the optical-to-electrical conversion unit is configured to perform optical-to-electrical conversion on the received optical signal, to obtain a current signal comprising a first current signal; and
the shunt circuit is configured to shunt the first current signal to obtain N second current signals used to generate N second voltage signals Vi, wherein N is an integer greater than or equal to 1, and i is an integer greater than or equal to 1 and less than or equal to N.

2. The apparatus according to claim 1, wherein the N second voltage signals are used to determine distance information of a target object generating the reflected signal and/or intensity information of the optical signal.

3. The apparatus according to claim 1 or 2, wherein the shunt circuit is configured to shunt the first current signal based on N preset first control signals, to obtain the N second current signals.

4. The apparatus according to claim 3, wherein the shunt circuit comprises N second shunt circuits, and the N second shunt circuits are configured to shunt the first current signal based on the N preset first control signals, to obtain the N second current signals.

5. The apparatus according to any one of claims 1 to 4, wherein the shunt circuit is further configured to shunt the first current signal based on received N second control signals to obtain N fourth current signals used to generate N third voltage signals V_{i'}.

6. The apparatus according to claim 5, wherein the N third voltage signals V_{i'} are used to determine the distance information of the target object generating the reflected signal and/or the intensity information of the optical signal.

7. The apparatus according to any one of claims 1 to 5, wherein the shunt circuit further comprises a first shunt circuit, and the current signal further comprises a third current signal used to generate a first voltage signal V₀, wherein
the first shunt circuit is configured to shunt the third current signal.

8. The apparatus according to claim 7, wherein the first voltage signal V₀ is used to determine the distance information of the target object generating the reflected signal and/or the intensity information of the optical signal.

9. The apparatus according to claim 7 or 8, wherein a current value of the current signal is greater than a preset threshold, and a current value of the third current signal is less than the preset threshold.

10. A shunt circuit, comprising a first node N₁, N second shunt circuits, and N processing circuits, wherein the first node N₁ is coupled to input ends of the N second shunt circuits, and output ends of the N second shunt circuits are respectively coupled to input ends of the N processing circuits, wherein N is an integer greater than or equal to 1;
the first node N₁ is configured to input a first current signal to the N second shunt circuits; and
the N second shunt circuits are configured to shunt the first current signal to obtain N second current signals; and the N processing circuits are configured to process the N second current signals to generate N second voltage signals Vᵢ, wherein
i is an integer greater than or equal to 1 and less than or equal to N.

11. The circuit according to claim 10, wherein the shunt circuit further comprises a first component and a first shunt circuit, an output end of the first component is coupled to an input end of the first shunt circuit, and the output end of the first component is coupled to each of input ends of the N second shunt circuits through the first node N₁;
the first component is configured to obtain a current signal comprising the first current signal and a third current signal; and
the first shunt circuit is configured to shunt the third current signal used to generate a first voltage signal V₀.

12. The circuit according to claim 10 or 11, wherein the N second shunt circuits are configured to shunt the first current signal based on N preset first control signals, to obtain the N second current signals.

13. The circuit according to any one of claims 10 to 12, wherein the N processing circuits are further configured to receive N second control signals;
the N second shunt circuit is further configured to shunt the first current signal based on the N second control signals, to obtain N fourth current signals; and
the N processing circuits are further configured to process the N fourth current signals, to obtain N third voltage signals Vr.

14. The circuit according to any one of claims 10 to 13, wherein an i^{th} second shunt circuit in the N second shunt circuits comprises a discharge circuit Dᵢ, and each of the N processing circuits comprises a first resistor Rₛₑₙₛₒᵣ, a second node N₂, a first capacitor C₁, and an amplification circuit; and an input end of the discharge circuit Dᵢ is coupled to the first node N₁, the first resistor Rₛₑₙₛₒᵣ is coupled to both an output end of the discharge circuit Dᵢ and an input end of the amplification circuit, one end of the first capacitor C₁ is coupled to both the first resistor Rₛₑₙₛₒᵣ and the input end of the amplification circuit through the second node N₂, and the other end is grounded, wherein
the discharge circuit Dᵢ is configured to shunt the first current signal, to obtain the second current signals;
the first resistor Rₛₑₙₛₒᵣ is configured to convert the second current signals into fourth voltage signals, and input the fourth voltage signals to the amplification circuit; and
the amplification circuit is configured to amplify the fourth voltage signals, to obtain the second voltage signals Vᵢ.

15. The circuit according to claim 14, wherein the amplification circuit comprises a first amplification circuit, and the first amplification circuit is configured to amplify the fourth voltage signals, to obtain the second voltage signals Vᵢ.

16. The circuit according to claim 15, wherein the first amplification circuit comprises a second amplifier T₂.

17. The circuit according to claim 14, wherein the amplification circuit comprises a logarithmic amplification circuit and a second amplification circuit, an input end of the logarithmic amplification circuit is coupled to the first resistor Rₛₑₙₛₒᵣ, and an output end of the logarithmic amplification circuit is coupled to an input end of the second amplification circuit;
the logarithmic amplification circuit is configured to amplify the fourth voltage signals to obtain fifth voltage signals; and
the second amplification circuit is configured to amplify the fifth voltage signals to obtain the second voltage signals Vᵢ.

18. The circuit according to claim 17, wherein the logarithmic amplification circuit comprises a second amplifier T₂, a second resistor R₁, an equivalent diode D₃, a third node N₃, and a second capacitor C₂, and the second amplification circuit comprises a third amplifier T₃; one end of the second resistor R₁ is coupled to an output end of the second amplifier T₂, and the other end is coupled to both an input end of the equivalent diode D₃ and an input end of the third amplifier T₃; and one end of the second capacitor C₂ is coupled to an output end of the equivalent diode D₃ through the third node N₃, and the other end is grounded.

19. The circuit according to any one of claims 11 to 18, wherein the first component is an optical-to-electrical converter, and the first component is further configured to:
receive an optical signal, and convert the optical signal into the current signal.

20. The circuit according to any one of claims 11 to 19, wherein the first shunt circuit comprises a first amplifier T₁.

21. The circuit according to any one of claims 18 to 20, wherein the discharge circuit Dᵢ or the equivalent diode D₃ is one of the following components:
a diode, a MOS transistor, or a transistor.

22. The circuit according to any one of claims 10 to 21, wherein the N second voltage signals are used to determine distance information of a target object generating a reflected signal and/or intensity information of the optical signal.

23. The circuit according to any one of claims 11 to 22, wherein the first voltage signal V₀ is used to determine the distance information of the target object generating the reflected signal and/or the intensity information of the optical signal.

24. The circuit according to claims 13 to 23, wherein the N third voltage signals are used to determine the distance information of the target object generating the reflected signal and/or the intensity information of the optical signal.

25. The circuit according to any one of claims 11 to 24, wherein a current value of the current signal is greater than a preset threshold, and a current value of the third current signal is less than the preset threshold.

26. A terminal device, comprising the detection apparatus according to any one of claims 1 to 9.
